# EUROPEAN PATENT SPECIFICATION

(11) **EP 3 866 091 B1**
(45) Date of publication and mention of the grant of the patent: **27.12.2023**
(21) Application number: 21154922.5
(22) Date of filing: 03.02.2021
(51) Int. Cl.: G06Q 20/20, G06Q 20/32, G06Q 30/0601, G07G 1/14

(54) **TRANSACTION PROCESSING SYSTEM AND INFORMATION PROCESSING METHOD**
TRANSAKTIONSVERARBEITUNGSSYSTEM UND INFORMATIONSVERARBEITUNGSVERFAHREN
SYSTÈME DE TRAITEMENT DE TRANSACTIONS ET PROCÉDÉ DE TRAITEMENT D'INFORMATIONS

(30) Priority: 14.02.2020 JP 2020023539
(43) Date of publication of application: 18.08.2021
(73) Proprietor: Toshiba Tec Kabushiki Kaisha, Shinagawa-ku Tokyo 141-8562 (JP)
(72) Inventor: Aburaya, Yusuke, Shinagawa-ku, Tokyo 141-8562 (JP)
(74) Representative: Bandpay & Greuter

(56) References cited:
- US-A1- 2016 328 225
- US-A1- 2017 161 716
- US-A1- 2017 178 104
- US-A1- 2018 276 638
- US-A1- 2019 251 614

## Description

### FIELD

Embodiments described herein relate generally to a handheld wireless terminal, a transaction processing system and an information processing method.

### BACKGROUND

With respect to commercial transactions in a store such as a supermarket, a transaction processing system performs registration of merchandise using a portable terminal such as a smart phone carried by a customer. Such a transaction processing system is referred to as, for example, a "smartphone POS system." A single application program installed on the portable terminal may be convenient to a user if it could be used for transaction processing at multiple, unrelated stores.

However, the administration screens displayed on the portable terminal via such a single program would be the same for all the different stores. This may be undesirable for the stores themselves, which might prefer the ability to customize or alter the administration screen to reflect store-related needs.

In view of these circumstances, it is desirable that screens displayed on the portable terminal may be flexibly configured based on each store's preference.

US 2016/328225 A1 discloses systems and methods for location-based application installation.

### DESCRIPTION OF THE DRAWINGS

FIG. 1 is a block diagram illustrating a schematic configuration of a transaction processing system according to one embodiment.
FIG. 2 is a block diagram illustrating a circuit configuration of a portable terminal.
FIG. 3 is a block diagram illustrating a circuit configuration of a transaction processing server.
FIG. 4 schematically illustrates a configuration of a data record included in management databases.
FIG. 5 is a flowchart of UI processing performed by a processor.
FIG. 6 is a flowchart illustrating transaction processing performed by a processor.
FIG. 7 is a flowchart illustrating an example of a portion of registration processing.
FIG. 8 illustrates an example of a list screen.
FIG. 9 illustrates an example of a list screen.

### DETAILED DESCRIPTION

The invention is set out in the appended set of claims.

There is provided a transaction processing system and an information processing method by which a portable terminal possessed by a customer can be caused to function as a user interface for shopping at different stores using a single application stored on the portable terminal, while also permitting each shop at which the customer using the single application for shopping to provide customized screens for display on the portable terminal.

In general, according to an embodiment, a handheld wireless terminal is provided according to claim 1.

Preferably, the handheld wireless terminal further comprises a camera, wherein the mobile POS operation further includes controlling the camera to perform a code scanning operation based on a user operation on the operation screen displayed on the display.

Preferably, the mobile POS operation further includes controlling the second wireless communication interface to transmit a product code obtained by the code scanning operation to cause registration of a product identified by the product code.

Preferably, the mobile POS operation further includes controlling the second wireless communication interface to transmit a cancellation instruction to cancel registration of the product based on a user operation on the operation screen.

Preferably, the mobile POS operation further includes controlling the second wireless communication interface to transmit a settlement instruction to perform settlement of registered products.

A display format of a first operation screen identified by a screen ID associated with a first store ID is different from a display format of a second operation screen identified by the screen ID associated with a second store ID.

Preferably, the processor is configured to perform the mobile POS operation based on a mobile POS application program installed thereto.

Preferably, the mobile POS operation further includes: upon determining that the screen file depository stores all of the screen data of the one or more operation screens, controlling the second wireless communication interface to transmit a notification indicating all of the screen data has been downloaded.

There is also provided a transaction processing system according to claim 8.

Preferably, the transaction processing server is configured to register a product identified by a product code transmitted by the handheld wireless terminal.

Preferably, the transaction processing server is configured to cancel registration of the product based on a cancellation instruction transmitted by the handheld wireless terminal.

Preferably, the transaction processing server is configured to perform settlement of the registered products based on a settlement instruction transmitted by the handheld wireless terminal.

Preferably, the wireless access point in each of the store systems is provided near a store entrance.

Preferably, the transaction processing server is configured to return a non-registered store notification in response to the store entry inquiry when the store ID of the visited store is not registered.

There is also provided a method for performing a mobile point-of-sales (POS) operation according to claim 14.

Hereinafter, an example of a transaction processing system is described with reference to the drawings.

The transaction processing system of this example processes transactions of the form in which a customer takes out merchandise displayed in the store from the display place and purchases the merchandise.

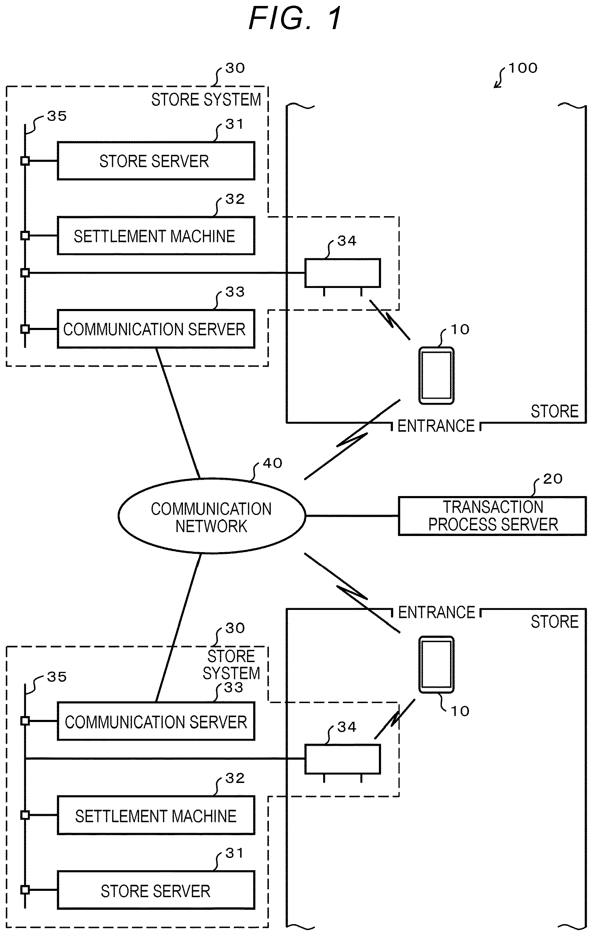

FIG. 1 is a block diagram illustrating a schematic configuration of a transaction processing system 100 according to the present embodiment.

The transaction processing system 100 includes a plurality of portable terminals 10, a transaction processing server 20, and a plurality of store systems 30 communicably connected via a communication network 40.

The portable terminal 10 is an information communication terminal that functions as a user interface for a customer who goes shopping using the transaction processing system 100 at a store. The portable terminal 10 includes a function of wirelessly communicating with the store system 30 and a function of wirelessly communicating with the communication network 40. The portable terminal 10 may be referred to as a handheld wireless terminal.

The transaction processing server 20 is a server device that executes information processing for processing transactions in each of the plurality of stores (hereinafter, referred to as member stores) using the transaction processing system 100. The transaction processing server 20 provides a transaction processing service described below as a cloud service, for example, via the communication network 40.

FIG. 1 illustrates two store systems 30. These store systems 30 are provided in respectively different member stores using the transaction processing system 100. Three or more member stores may be present, and the store systems 30 are provided on a per member store basis. The business operators of the plurality of member stores may be the same or different from each other.

As the communication network 40, for example, the Internet, a virtual private network (VPN), a local area network (LAN), a public communication network, or a mobile communication network can be used by itself or in combination appropriately. As the communication network 40, typically, a mobile communication network, the Internet, or VPN is used.

The schematic configuration of each of the store systems 30 is common. That is, the store system 30 is communicably configured with a store server 31, a settlement machine 32, a communication server 33, and an access point 34 via an in-store communication network 35. However, the store server 31, the communication server 33, the settlement machine 32, the access point 34, and the in-store communication network 35 may have common functions for performing the operations described below and is not required to be completely the same. A portion of the store systems 30 may include a device not illustrated in FIG. 1. A portion or all of the store systems 30 may not include the settlement machine 32.

The store server 31 executes the information processing for managing transactions performed in one member store. The store server 31 has, for example, a function the same as a POS server in the related art.

The settlement machine 32 performs a process for obtaining a price relating to merchandise to be purchased on a per transaction basis registered in the transaction processing server 20 and causing a customer to pay the price. The settlement completion command data generated in the transaction processing server 20 for the payment may be given to the settlement machine 32 via the store server 31 or may be given to the settlement machine 32 without the store server 31. The payment method that can be used by the settlement machine 32 for the payment may be all or a portion of well-known payment methods such as cash payment, credit card payment, electronic money payment, point payment, and code payment (also referred to as mobile payment or smartphone payment). The settlement machine 32 may be administered by any one of a clerk and a customer. As the settlement machine 32, for example, a self-service-type settlement machine using a semi-self-service-type POS system in the related art can be used. The settlement machine 32 may have a function of executing the information processing for registering the merchandise as the merchandise to be purchased. In this case, as the settlement machine 32, for example, a face-to-face-type POS terminal used in the POS system in the related art or a self-service-type POS terminal used in a self-service-type POS system in the related art can be used.

The communication server 33 executes the communication process in which the store server 31 and the settlement machine 32 transmit and receive data to and from the transaction processing server 20 via the communication network 40.

The access point 34 executes the communication process for enabling the portable terminal 10 to access the in-store communication network 35 by the wireless communication. As the access point 34, for example, a communication device in the related art that performs wireless communication according to the IEEE 802.11 standard can be used. The access point 34 is provided so that the portable terminal 10 positioned near the entrance of the member store can perform wireless communication. Immediately after the customer enters the member store through the entrance of the member store, the access point 34 is preferably provided so that the portable terminal 10 possessed by the customer can perform wireless communication. According to the member store, the plurality of access points 34 are disposed in one store system 30.

As the in-store communication network 35, for example, the internet, a VPN, a LAN, a public communication network, a mobile communication network, or the like can be used by itself or in combination appropriately. However, typically, the in-store communication network 35 is a LAN.

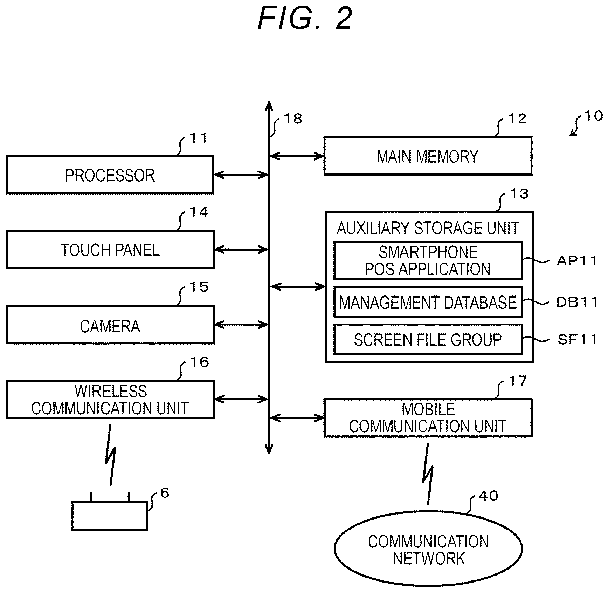

FIG. 2 is a block diagram illustrating a circuit configuration of the portable terminal 10.

The portable terminal 10 includes a processor 11, a main memory 12, an auxiliary storage unit 13, a touch panel 14, a camera 15, a wireless communication unit 16, a mobile communication unit 17, a transmission line 18, and the like. The processor 11 can communicate with the main memory 12, the auxiliary storage unit 13, the touch panel 14, the camera 15, and the mobile communication unit 17 via the transmission line 18. Also, by the connection of the processor 11, the main memory 12, and the auxiliary storage unit 13 via the transmission line 18, a computer for controlling the portable terminal 10 is configured.

The processor 11 corresponds to the central part of the computer. The processor 11 executes the information processing for performing various functions as the portable terminal 10 according to an information processing program such as an operating system and an application program. The processor 11 is, for example, a central processing unit (CPU).

The main memory 12 corresponds to the main memory part of the computer. The main memory 12 includes a non-volatile memory area and a volatile memory area. The main memory 12 stores the information processing program in the non-volatile memory area. The main memory 12 may store data required by the processor 11 for executing the information processing in a non-volatile or volatile memory area. The main memory 12 uses the volatile memory area as a work area to which data is appropriately rewritten by the processor 11. The non-volatile memory area is, for example, a read only memory (ROM). The volatile memory area is, for example, a random access memory (RAM).

The auxiliary storage unit 13 corresponds to the auxiliary storage part of the computer. As the auxiliary storage unit 13, for example, a storage unit using a well-known storage device such as electric erasable programmable read-only memory (EEPROM), a hard disc drive (HDD), or a solid state drive (SSD) can be used. The auxiliary storage unit 13 stores the data used by the processor 11 for executing various processes, the data generated by the process in the processor 11, or the like. The auxiliary storage unit 13 may store the information processing program.

The touch panel 14 is a display device that displays various screens such as an administration screen. The touch panel 14 is an administration device for receiving the administration according to the administration screen.

The camera 15 includes an optical system and an image sensor and generates image data representing an image in a visual field which is formed by the optical system by the image sensor.

The wireless communication unit 16 is a wireless communication interface and transmits and receives the data to and from the access point 34 by the wireless communication according to the wireless communication protocol. As the wireless communication unit 16, for example, a communication device in the related art conforming to the IEEE802.11 standard can be used.

The mobile communication unit 17 is a wireless communication interface of the data communication via the communication network 40. As the mobile communication unit 17, for example, the communication device in the related art for executing the data communication via the mobile communication network can be used.

The transmission line 18 includes an address bus, a data bus, a control signal line, and the like and transmits the data and the control signal transmitted and received to and from each connected unit.

The auxiliary storage unit 13 stores a smartphone POS application AP11 which is one information processing program. The smartphone POS application AP11 is an application program, and the information processing described below which causes the portable terminal 10 to function as the user interface of the transaction processing system 100 is described. The smartphone POS application AP11 is an example of a mobile POS application program. The smartphone POS application AP11 is commonly used in the plurality of portable terminals 10. The auxiliary storage unit 13 uses a portion of the storage area as a storage area of a management database DB 11 and a screen file group SF11. The auxiliary storage unit 13 or a portion thereof that stores the screen file group SF11 may be referred to as a screen file depository. The management database DB11 is a database for managing the screen file included in the screen file group SF11. The screen file group SF11 includes a plurality of screen files presenting the administration screens. That is, the auxiliary storage unit 13 is an example of the storage device that stores the plurality of administration screens.

As the hardware of the portable terminal 10, an information processing device including a data communication function such as a smart phone or a tablet terminal can be used. Also, the portable terminal 10 is generally transferred in a state in which the smartphone POS application AP11, the management database DB11, and the screen file group SF11 are not stored in the auxiliary storage unit 13. Also, in response to the administration of any operator, the smartphone POS application AP11 is written to the auxiliary storage unit 13, so that the portable terminal 10 may be configured. The smartphone POS application AP11 can be transferred by the recording in a removable recording medium such as a magnetic disk, a magneto-optical disk, an optical disk, or a semiconductor memory or the communication via the communication network 40. The management database DB11 and the screen file group SF11 are downloaded from the transaction processing server 20 as described below and written to the auxiliary storage unit 13 by the processor 11. At least a portion of the smartphone POS application AP11, the management database DB11, and the screen file group SF11 may be stored in the main memory 12.

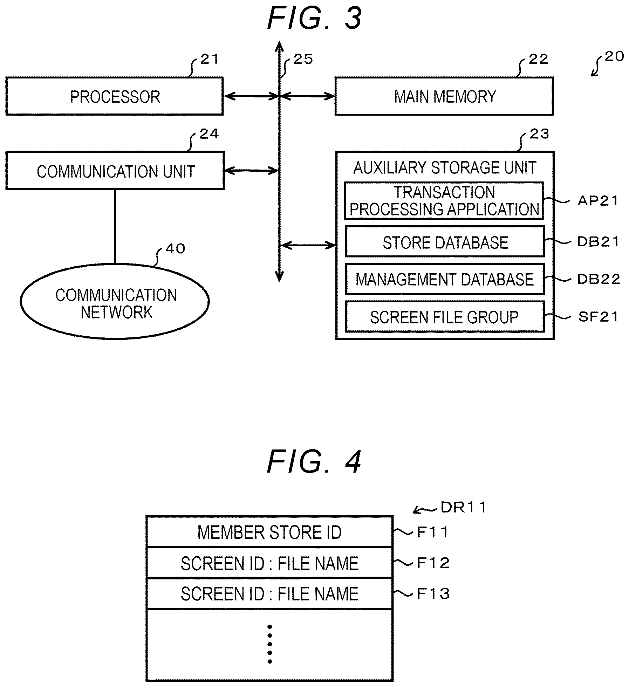

FIG. 3 is a block diagram illustrating a circuit configuration of the transaction processing server 20.

The transaction processing server 20 includes a processor 21, a main memory 22, an auxiliary storage unit 23, a communication unit 24, and a transmission line 25. The processor 21, the main memory 22, the auxiliary storage unit 23, and the communication unit 24 can communicate with each other via the transmission line 25. For the connection of the processor 21, the main memory 22, and the auxiliary storage unit 23 via the transmission line 25, a computer for controlling the transaction processing server 20 is configured.

The processor 21 corresponds to the central part of the computer. The processor 21 executes the information processing for performing various functions as the transaction processing server 20 according to the information processing program such as the operating system and the application program. The processor 11 is, for example, a CPU.

The main memory 22 corresponds to the main memory part of the computer. The main memory 22 includes a non-volatile memory area and a volatile memory area. The main memory 22 stores the information processing program in the non-volatile memory area. The main memory 22 may store data required by the processor 21 for executing the information processing in a non-volatile or volatile memory area. The main memory 22 uses the volatile memory area as the work area in which data is appropriately rewritten by the processor 21. The non-volatile memory area is, for example, a ROM. The volatile memory area is, for example, a RAM.

The auxiliary storage unit 23 corresponds to the auxiliary storage part of the computer. As the auxiliary storage unit 23, for example, a storage unit using a well-known storage device such as an EEPROM, an HDD, or an SSD can be used. The auxiliary storage unit 23 stores data used by the processor 21 for executing various processes, data generated by a process in the processor 21, or the like. The auxiliary storage unit 23 may store the information processing program.

The communication unit 24 executes a communication process for data communication via the communication network 40. As the communication unit 24, for example, a well-known internet connection device can be applied.

The transmission line 25 includes an address bus, a data bus, a control signal line, and the like and transmits the data and the control signal transmitted and received to and from each connected unit.

The auxiliary storage unit 23 stores a transaction processing application AP21. The transaction processing application AP21 is an application program, and the information processing which enables a customer in each member store to do shopping using the portable terminals 10 is described. The auxiliary storage unit 23 uses a portion of the storage area as a storage area of a store database DB21, a management database DB22, and a screen file group SF21. The store database DB21 is a database for managing the member store. The management database DB22 is a database for managing the screen file included in the screen file group SF21. The screen file group SF21 includes a plurality of screen files indicating administration screens.

The store database DB21 is a set of data records correlating to the member stores, respectively. One data record relates to the correlated member store, and includes a member store identifier (hereinafter, referred to as a member store ID), a store name, a company identifier, a company name, a service set identifier (SSID), and the like. Any information can be included in the data record of the store database DB21, but at least includes the member store ID and the SSID. The member store ID is an identifier determined so as to be capable of identifying the correlated member store from the other member stores. The SSID is an identifier assigned to the access point 34 included in the store system 30 including the correlated member store. Instead of the SSID, other identifiers that can identify the access point 34 such as a MAC address may be used.

FIG. 4 schematically illustrates a configuration of a data record DR11 included in the management databases DB11 and DB22.

The management databases DB11 and DB22 are sets of the data records DR11 in the configuration illustrated in FIG. 4. The data record DR11 is correlated with a member store and includes the fields F11, F12, F13, and the like. The member store ID of the correlated member store is set in the field F11. The screen management data respectively relating to the plurality of administration screens for receiving the administration of the customer relating to the instructions for the transaction processes are set in the fields after the field F12. The screen management data includes a screen identifier (hereinafter, referred to as a screen ID) and a file name. The screen ID is an identifier for identifying an administration screen for receiving the administration for the instruction in each stage of the transaction processing by the processors 11 and 21 in the portable terminal 10 and the transaction processing server 20. According to the present embodiment, administration screens are allowed to be assigned on a per member store basis to one screen ID. The file name relates to the correlated member store and is a name for identifying a screen file indicating an administration screen assigned to the screen ID included in the same screen management data. Any administration screen may be assigned to the screen ID, for example, by a person in charge at the member store.

The management database DB 11 includes the data records DR11 respectively correlated to all member stores, in principle. The management database DB22 includes the data record DR11 correlated to a portion of the member stores, in principle. However, the management database DB22 may include the data record DR11 correlated to all of the member stores, respectively.

The screen files included in the screen file groups SF11 and SF21 are data files identified by file names included in the screen management data set in fields after the field F12 of the data record DR11 included in the management databases DB 11 and DB22 stored in the same auxiliary storage units 13 and 23.

As the hardware of the transaction processing server 20, for example, a general server device can be used. Generally, the transaction processing server 20 is transferred in a state in which the transaction processing application AP21 is stored in the auxiliary storage unit 23, and the management database DB22 and the screen file group SF21 are not stored. The hardware in a state in which the transaction processing application AP21 is not stored in the auxiliary storage unit 23 or in a state in which the same application program of a different version is stored in the auxiliary storage unit 23 and the transaction processing application AP21 may be independently transferred. In response to the administration of any operator, the transaction processing server 20 may be configured by the transaction processing application AP21 written to the auxiliary storage unit 23. The transaction processing application AP21 can be transferred by the recording in a removable recording medium such as a magnetic disk, a magneto-optical disk, an optical disk, or a semiconductor memory or the communication via the communication network 40. The management database DB22 and the screen file group SF21 are written to the auxiliary storage unit 23 by the processor 21 under the instruction of the manager of the transaction processing server 20. At this point, the processor 21 writes the management database DB22 and the screen file group SF21 read from the removable recording medium or obtained by the communication via the communication network 40 to the auxiliary storage unit 23. Otherwise, the processor 21 writes the management database DB22 and the screen file group SF21 generated under the instruction of the manager of the transaction processing server 20 to the auxiliary storage unit 23. At least of a portion of the transaction processing application AP21, the management database DB22, and the screen file group SF21 may be stored in the main memory 22.

The operation of the transaction processing system configured as above is described below. The contents of various processes described below are examples, and it is possible to appropriately change the order of some processes, omit some processes, or add other processes, and the like. For example, in the following description, for easier understanding of characteristic operation of the present embodiment, the description of a portion of the processing is omitted. For example, if a certain kind of error occurs, a process for dealing with the error may be performed, but the description of such a process is omitted.

If a customer goes to shopping at a member store using the transaction processing service provided by the transaction processing system 100, the customer who possesses the portable terminal 10 activates the user interface information processing (hereinafter, referred to as UI processing) according to the smartphone POS application AP11 and enters the member store. The UI processing may also be referred to as a mobile POS operation.

The access point 34 periodically transmits a packet (hereinafter, referred to as a beacon) including an SSID assigned to the own device. If the wireless communication unit 16 of the portable terminal 10 possessed by the customer who enters the member store can communicate with the access point 34, the wireless communication unit 16 receives the beacon. The beacon is transmitted from a communication device other than the access point included in the store system 30, and the wireless communication unit 16 also receives the beacon as described above. The wireless communication unit 16 may receive the plurality of beacons.

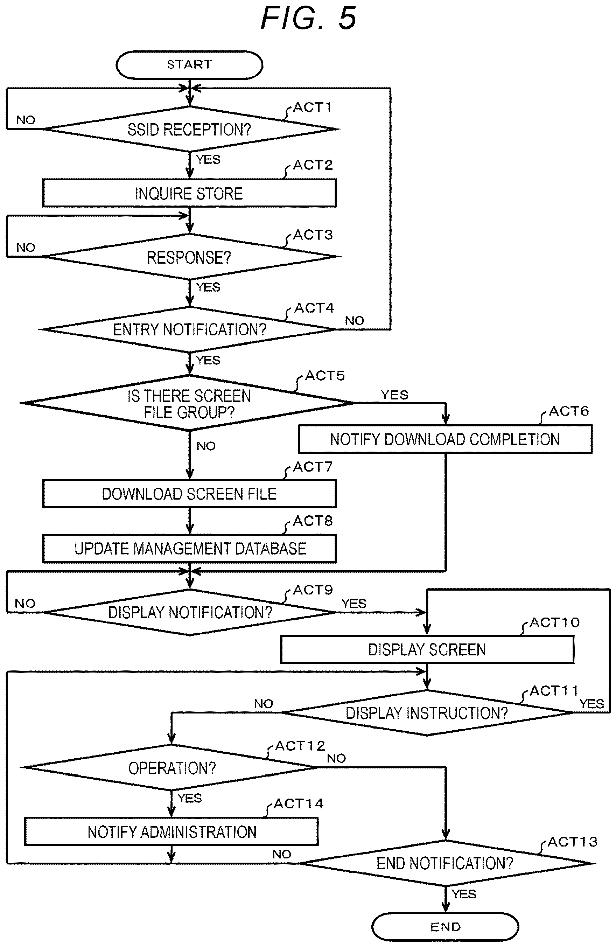

FIG. 5 is a flowchart of UI processing performed by the processor 11.

As Act 1, the processor 11 waits for the reception of the SSID. If the beacon is received by the wireless communication unit 16 described above, the processor 11 determines YES and the process proceeds to Act 2. At this point, the processor 11 stores the SSID included in the received beacon in the main memory 12 or the auxiliary storage unit 13.

As Act 2, the processor 11 performs an entry inquiry. The processor 11 transmits, for example, the inquiry data for the entry inquiry from the mobile communication unit 17 to the communication network 40 toward the transaction processing server 20. The processor 11 at least includes, for example, in the inquiry data, identification data for identifying an inquiry whether the store is a member store and an SSID included in the beacon received by the wireless communication unit 16. The inquiry data may be referred to as a store entry inquiry.

The inquiry data transmitted by the communication network 40 to the transaction processing server 20 is received by the communication unit 24. In response to this, the processor 21 starts the information processing (hereinafter, referred to as transaction processing) according to the transaction processing application AP21. If the inquiry data transmitted from another portable terminal 10 is received by the communication unit 24 while the started transaction processing is executed, the processor 21 executes new transaction processing together with the transaction processing in the execution. That is, the processor 21 executes the plurality of transaction processes respectively targeting to the plurality of portable terminals 10 in parallel. In the description relating to the following transaction process, the expression "the portable terminal 10" by itself refers to the portable terminal 10 that is a target of the transaction processing.

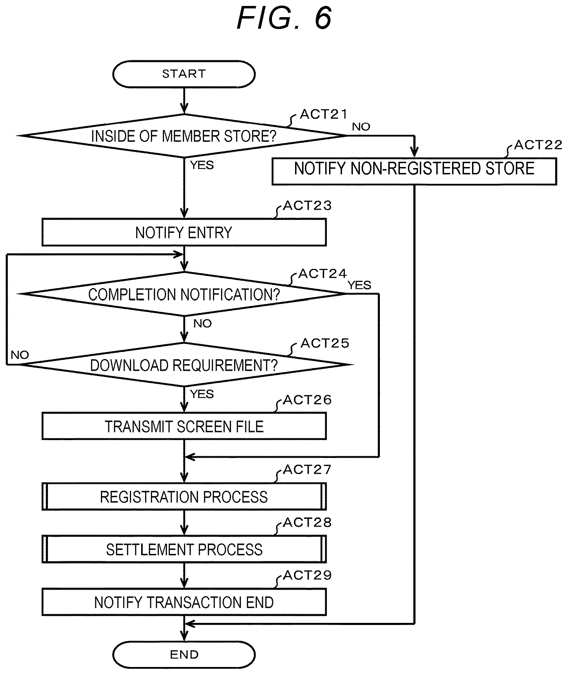

FIG. 6 is a flowchart illustrating the transaction processing performed by the processor 21.

As Act 21, the processor 21 determines whether the portable terminal 10 which is the inquiry source is positioned in the member store. The processor 21 determines whether any SSID included in the inquiry data is identical to the SSID included in the data record included in the store database DB21. Then, if an identical SSID is not found, the processor 21 regards that the portable terminal 10 is not positioned at a member store and determines NO and the process proceeds to Act 22.

As Act 22, the processor 21 notifies the portable terminal 10 of the inquiry source that the entry is to a non-registered store (e.g., non-registered store notification). The processor 21 transmits response data including identification data for identifying, for example, the non-registered store notification from the communication unit 24 to the communication network 40 toward the portable terminal 10 of the inquiry source. Then, the processor 21 ends the transaction processing.

As Act 21, if an SSID identical to any SSID included in the inquiry data is found from the store database DB21, the processor 21 regards that the portable terminal 10 is positioned at the member store, determines YES, and the process proceeds to Act 23. At this point, the processor 21 determines the store identified by the member store ID included in the data record including the found SSID as the entered member store.

As Act 23, the processor 21 notifies the portable terminal 10 of the inquiry source of the entry to the member store. The processor 21 transmits, for example, the response data including the identification data for identifying the entry notification from the communication unit 24 to the communication network 40 toward the portable terminal 10 of the inquiry source. The processor 21 further includes, for example, a management record relating to the entered member store in the response data. The processor 21 regards the data record DR11 that the member store ID of the entered member store included in the management database DB22 is set to be the field F11, as the management record.

The response data transmitted to the portable terminal 10 by the communication network 40 is received by the mobile communication unit 17.

In the portable terminal 10, if the processor 11 performs the inquiry in Act 2 of FIG. 5, the process proceeds to Act 3.

As Act 3, the processor 11 waits for the response. Then, if the response data as described above is received by the communication unit 24, the processor 11 determines YES and the process proceeds to Act 4.

As Act 4, the processor 11 determines whether the response data is the store entry notification. Then, if the response data for a non-registered store notification is received, the processor 11 determines NO and returns to the standby state of Act 1. If the processor 11 returns to the standby state of Act 1 in this manner, it is preferable to take measures to prevent repetition of the inquiry about the same SSID. For example, the processor 11 determines YES only if an SSID different from the SSID included in the inquiry data when Act 2 was previously executed is received.

If the response data for the store entry notification is received, the processor 11 determines YES in Act 4 and the process proceeds to Act 5. At this point, the processor 11 stores the management record included in the response data in the main memory 12 or the auxiliary storage unit 13. The management record includes the member store ID of the entered member store, and the member store ID corresponds to the store identifier for identifying the store visited by the customer. By the execution of the information processing based on the smartphone POS application AP11 by the processor 11, the computer with the processor 11 as the central part functions as an identifier obtaining unit.

As Act 5, the processor 11 determines whether the screen file group relating to the entered member store is included in the screen file group SF11. The processor 11 searches, for example, screen files respectively identified by all file names included in the management record included in the response data from the screen files included in the screen file group SF11. Then, if all of the screen files are found, the processor 11 regards that there is the screen file group, determines YES, and the process proceeds to Act 6.

As Act 6, the processor 11 notifies the transaction processing server 20 of the download completion of the screen files. The processor 11 transmits, for example, the notification data for notifying the download completion from the mobile communication unit 17 to the communication network 40 toward the transaction processing server 20. The processor 11 includes the identification data for identifying the notification of download completion in the notification data. Thereafter, the process proceeds to Act 9.

If no screen file is found, the processor 11 regards that the screen file group is not present, determines NO, and the process proceeds to Act 7.

As Act 7, the processor 11 downloads the screen file group. The processor 11 transmits, for example, the request data for requesting the downloading of the screen file group from the mobile communication unit 17 to the communication network 40 toward the transaction processing server 20. The processor 11 includes the identification data for identifying the downloading request in the request data. The processor 11 may cause any one of the screen ID and the file name of the screen file which is not found to be included in the request data. Then, if the screen file transmitted from the transaction processing server 20 in response to this request is received by the mobile communication unit 17, the processor 11 adds the screen file to the screen file group SF11. The size of the storage area for storing the screen file group SF11 may be restricted. In this case, if the data size of the screen file group SF11 exceeds the restricted size by newly adding a screen file, the processor 11 deletes the screen file matching the predetermined condition from the screen file group SF11. Otherwise, the processor 11 may always secure a room for adding a new screen file by periodically deleting screen files matching the predetermined condition from the screen file group SF11. That is, the processor 11 executes the information processing based on the smartphone POS application AP11 so that the computer with the processor 11 as the central part functions as a screen obtaining unit.

In the transaction processing server 20, the processor 21 transitions to standby states of Acts 24 and 25 after notifying the entry in Act 23 of FIG. 6.

As Act 24, the processor 21 determines whether the download completion is notified. Then, if the notification cannot be determined, the processor 21 determines NO and the process proceeds to Act 25.

As Act 25, the processor 21 determines whether the downloading is requested. Then, if the request cannot be determined, the processor 21 determines NO and the process returns to Act 24.

That is, in the standby states of Acts 24 and 25, the processor 21 waits for the notification of download completion or the downloading request. Also, if the request data for requesting downloading is received by the communication unit 24, the processor 21 determines YES in Act 25 and the process proceeds to Act 26.

As Act 26, the processor 21 transmits the screen file as the response to the request. If the screen IDs or the file names are not included in the request data, the processor 21 reads, for example, all the screen files identified by the file names included in the data record DR11 included as the management record in the notification data in Act 23 from the screen file group SF21 and transmits the screen files from the communication unit 24 to the portable terminal 10 of the request source via the communication network 40. If the screen IDs or the file names are included in the request data, the processor 21 reads, for example, all of the screen files identified by the screen IDs or the file names from the screen file group SF21 and transmits the screen files from the communication unit 24 to the portable terminal 10 of the request source via the communication network 40. At this point, the processor 21 notifies the portable terminal 10 of the request source of the screen IDs and the file names of the transmitted screen files.

In the portable terminal 10, if the screen files transmitted from the transaction processing server 20 as described above are received by the mobile communication unit 17, the processor 11 adds the screen files to the screen file group SF11. If adding of the screen files transmitted from the transaction processing server 20 to the screen file group SF11 is completed, the downloading of the screen files as Act 7 in FIG. 5 is completed.

As Act 8, the processor 11 updates the management database DB11 so as to reflect the result of downloading the screen files. The processor 11 adds, for example, a new field in which screen management data including the screen IDs and the file names notified together with the screen files added to the screen file group SF11 in Act 7 is set, to the management database DB 11.

In the transaction processing server 20, if the transmission of all of the screen files to be transmitted is completed, the process proceeds to Act 27 in FIG. 6. If the download completion is notified, the processor 21 determines YES in Act 24, skips Act 26, and the process proceeds to Act 27.

As Act 27, the processor 21 executes the registration processing. The registration processing is processing of registering merchandise taken out from the display place by the customer as merchandise to be purchased in response to the instruction performed by the customer manipulating the portable terminal 10. The processor 21 may execute a portion of the processes during the registration processing in cooperation with the store server 31 provided in the store where the portable terminal 10 is positioned. The processor 21 may obtain, for example, data such as the merchandise name and the sales price from the store server 31.

As Act 28, the processor 21 executes the settlement processing. The settlement processing is processing for determining the total price of the merchandise registered for purchased by the registration processing and requesting or causing the customer to pay the total price. The processor 21 may execute a portion of the processes during the settlement processing in cooperation with the store server 31 and the settlement machine 32 provided in the store where the portable terminal 10 is positioned. For example, if the customer desires the payment to be made by using a settlement machine 32, the processor 21 may send the information for the settlement completion command to the settlement machine 32 and entrust the settlement machine 32 with subsequent processes.

The contents of the registration processing and the settlement processing may be any contents. In general, the registration process and the settlement process may be processes which are the same as those in a smartphone POS system in the related art. However, in the registration process and the settlement process of present embodiment, the processor 21 requests that the portable terminal 10 display various administration screens for receiving the instructions or other inputs from the customer. The processor 21 performs processing in response to the instructions received via the displayed administration screens on the portable terminal 10. In order to instruct the display of particular administration screens by the portable display terminal 10, the processor 21 transmits instruction data to the portable terminal 10 via the communication unit 24 and the communication network 40. The processor 21 includes in the screen instruction data identification data for identifying a display instruction of an administration screen and a screen ID of the administration screen to be displayed.

Both the registration processing and the settlement processing are examples of the information processing for processing transactions. That is, by the execution of the information processing based on the transaction processing application AP21 by the processor 21, the computer with the processor 21 functions as a processing unit.

In the portable terminal 10, the process proceeds from Act 6 or 8 to Act 9, as depicted in FIG. 5.

As Act 9, the processor 11 waits for a display instruction. If the instruction data is received from the transaction processing server 20 by the mobile communication unit 17 for a display instruction for an administration screen, the processor 11 determines YES in Act 9 and the process proceeds to Act 10.

As Act 10, the processor 11 displays the administration screen on the touch panel 14 in response to the display instruction from the transaction processing server 20. Then, the processor 11 transitions to the standby state of Acts 11, 12, and 13 while the instructed administration screen is displayed on the touch panel 14.

As Act 11, the processor 11 checks whether another display instruction of an administration screen has been received. If another display instruction is not received, the processor 11 determines NO and proceeds to Act 12.

As Act 12, the processor 11 determines whether an input operation has been performed on the presently displayed administration screen. If no input operation is received via the displayed administration screen, the processor 11 determines NO and the process proceeds to Act 13.

As Act 13, the processor 11 determines whether an end notification instruction has been received. If the end notification instruction is not received, the processor 11 determines NO and the process returns to Act 11.

That is, the processor 11 waits for a screen display instruction, a user input via the displayed screen, or an end notification instruction while in the standby states of Acts 11 to Act 13.

By the user input according to the administration screen displayed on the touch panel 14, the customer performs various operations. In this context, the user input is, for example, tapping an object such as an icon, a soft key, or the like displayed on the administration screen. The user input can also be, for example, an action such as holding a merchandise barcode in view of the camera 15 so that the barcode is in the image presented on the administration screen by the camera 15. The user input may be various kinds of inputs that can be performed in the related art on a smart phone or a tablet terminal. Also, the user input may be made using an administration device such as a hard key, device button, or the like.

In this manner, if a user input is performed on or via the displayed administration screen, the processor 11 determines YES in Act 12 and the process proceeds to Act 14.

In Act 14, the processor 11 notifies the transaction processing server 20 of the performed user instruction ("administration") made on or via the displayed administration screen. The processor 11 transmits the notification data for indicating which user input (administration) has been made to the transaction processing sever 20 via the mobile communication unit 17 and the communication network 40. In this notification data, the processor 11 includes identification data for identifying the administration notification and the administration code for identifying the user input. The processor 11 includes an administration code particularly correlated to the administration object that was the target of the user input. For example, administration codes are respectively correlating to each of the various administration objects displayed on the administration screen(s).

At this point, the processor 11 inputs the instruction from the customer made on the administration screen displayed on the touch panel 14. Also, the processor 11 notifies the transaction processing server 20 as of the user input instruction(s). That is, by executing the information processing based on the smartphone POS application AP11 on the processor 11, the computer with the processor 11 as the central part functions as the input unit and the notification unit.

Thereafter, the processor 11 returns to the standby states of Acts 11 to 13.

If it is required to display a new administration screen during the registration processing and the settlement process, the processor 21 in the transaction processing server 20 instructs the portable terminal 10 to display the administration screen in the same manner as above. In response to this instruction, the processor 11 of the portable terminal 10 determines YES in Act 11 and the process returns to Act 10. That is, the processor 11 causes the new administration screen to be displayed on the touch panel 14 in Act 10 and transitions to the standby states of Acts 11 to 13.

In the transaction processing server 20, if the settlement processing as Act 28 in FIG. 6 is completed, the process proceeds to Act 29.

As Act 29, the processor 21 notifies the portable terminal 10 of the end of the transaction. The processor 21 transmits the notification data for notifying the transaction end to the portable terminal 10 via the communication unit 24 and the communication network 40. The processor 21 ends the transaction processing of FIG. 6.

In the portable terminal 10, if notification of the transaction end is received from the transaction processing server 20 by the mobile communication unit 17, the processor 11 determines YES in Act 13 in FIG. 5 and ends the UI processing illustrated in FIG. 5.

The operation when an administration based on the administration screen is performed is more specifically described.

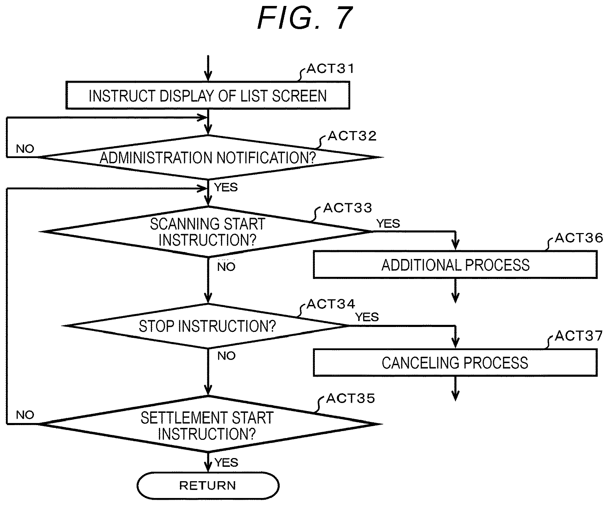

FIG. 7 is a flowchart illustrating an example of a portion of the registration processing.

As Act 31, the processor 21 instructs the portable terminal 10 to display a list screen. The list screen is a screen presenting a list of merchandise to be purchased when registration is completed. That is, by the execution of the information processing based on the transaction processing application AP21 by the processor 21, the computer with the processor 21 as the central part functions as the instruction unit that instructs the portable terminal 10 to display an administration screen.

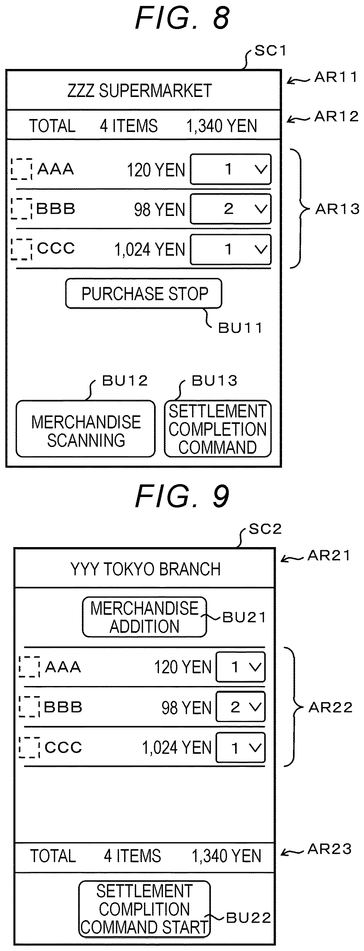

FIG. 8 illustrates an example of a list screen SC1.

The list screen SC1 is one administration screen for the store with a store name of "ZZZ supermarket".

The list screen SC1 includes display areas AR11, AR12, and AR13 and buttons BU11, BU12, and BU13. The display area AR11 presents the store name. The display area AR12 presents a total number of items of merchandise to be purchased and a total price for the merchandise to be purchased. The display area AR13 presents the list of merchandise to be purchased (that is, items that have already been registered but not yet paid for in the transaction). The button BU11 is a soft key for the customer to declare that all of the merchandise to be purchased should canceled and shopping stopped. The button BU12 is a soft key for the customer to declare that scanning of merchandise to be purchased is started. The button BU13 is a soft key for the customer to declare that the settlement processing (sales transaction completion) is to be started.

FIG. 9 illustrates an example of a list screen SC2.

The list screen SC2 is one administration screen for the store with a store name of "YYY Tokyo branch".

The list screen SC2 includes the display areas AR21, AR22, and AR23 and buttons BU21 and BU22. The display area AR21 presents the store name. The display area AR22 presents a list of merchandise items to be purchased. The display area AR23 presents a total number of items of merchandise to be purchased and a total price of the merchandise to be purchased. The button BU21 is a soft key for the customer to declare that scanning of merchandise to be purchased is started. The same administration code as the button BU12 is assigned to the button BU21. The button BU22 is a soft key for the customer to declare that the settlement processing (sales transaction completion) is to be started. The same administration code as the button BU13 is assigned to the button BU22.

For easier understanding of the difference between the list screen SC1 and the list screen SC2, the registration statuses of the merchandise to be purchased in FIGS. 8 and 9 are the same.

The display area AR11 and the display area AR12 have the same function, but include store names of the respectively different stores, and thus displayed contents are different. The display area AR13 and the display area AR22 are areas presenting the same information and have the same overall function, but positions of certain elements in the screen regions are different. The display area AR12 and the display area AR23 are areas presenting the same information and have the same overall function, but the positions in the respective screens are different. The button BU12 and the button BU21 are objects for receiving the same instruction, but the sizes, the character strings, and the screen positions of these objects are different. Likewise, button BU13 and the button BU22 are objects for receiving the same instruction, but the sizes, the character strings, and the screen positions are different. The list screen SC2 does not include an object that corresponds in function to the button BU11 on the list screen SC1.

The same screen ID is assigned to the list screen SC1 and the list screen SC2. The file name of the screen file presenting the list screen SC1 is set in any field subsequent to the field F12 of the data record DR11 correlating to the management databases DB11 and DB22 in the store with the store name of "ZZZ supermarket" together with the screen ID. The file name of the screen file presenting the list screen SC2 is set in any field subsequent to the field F12 of the data record DR11 correlating to the management databases DB11 and DB22 in the store with the store name of "YYY Tokyo branch" together with the screen ID.

If the display instruction by the processor 21 as Act 31 in FIG. 7 is performed on the portable terminal 10 positioned in the store with the store name of "ZZZ supermarket" (hereinafter, referred to as an A store), the processor 11 in the portable terminal 10 causes the touch panel 14 to display, for example, the list screen SC1 illustrated in FIG. 8, as Act 10 in FIG. 5. In contrast, if the display instruction by the processor 21 as Act 31 in FIG. 7 is performed on the portable terminal 10 positioned in the store with the store name of "YYY Tokyo branch" (hereinafter, referred to as a B store), the processor 11 in the portable terminal 10 causes the touch panel 14 to display, for example, the list screen SC2 illustrated in FIG. 9, as Act 10 in FIG. 5. In this manner, the administration screen displayed on the portable terminal 10 in response to the display instruction by the processor 21 as Act 31 in FIG. 7 is different in response to the position in the store of the portable terminal 10 or the like. That is, the processor 11 can cause the touch panel 14 as the display device carried by customer to display the administration screen for the customer in the form corresponding to the store identified in the SSID obtained in Act 1. That is, the computer with the processor 11 as the central part functions as the display control unit by the execution of the information processing based on the smartphone POS application AP11 by the processor 11.

If the processor 21 ends the display instruction as Act 31 in FIG. 7, the process proceeds to Act 32 in a state in which the list screen is displayed.

As Act 32, the processor 21 waits for the notification of the administration in the list screen. Then, if the administration notification is performed from the portable terminal 10 as described below, the processor 21 determines YES and the process proceeds to Act 33.

As Act 33, the processor 21 determines whether the start of scanning the merchandise is designated. Then, if the designation is not determined, the processor 21 determines NO and the process proceeds to Act 34.

As Act 34, the processor 21 determines whether the stopping of the shopping is designated. If the designation is not determined, the processor 21 determines NO and the process proceeds to Act 35.

As Act 35, the processor 21 determines whether the start of the settlement completion command is designated. If designation is not determined, the processor 21 determines NO and the process returns to Act 33.

That is, as Acts 33 to 35, the processor 21 waits for the designation of any one of the start and the stop of the scanning, and the start of the settlement completion command.

When registering the merchandise as merchandise to be purchased, the customer performs predetermined administration for instructing the start of scanning in the list screen during the display. The customer taps the button BU12 presented on the list screen SC1, for example, in the A store. The customer taps the button BU21 presented on the list screen SC2, for example, in the B store. As described above, the same administration code is assigned to the button BU12 and the button BU21. Accordingly, the notification of the administration performed by the processor 11 in Act 14 of FIG. 5 in response to the administration is to notify the administration for the same scanning start instruction.

In the transaction processing server 20, if the administration for the scanning start instruction is notified, the processor 21 determines YES in Act 33 and the process proceeds to Act 36.

As Act 36, the processor 21 executes the addition processing for adding new merchandise to the merchandise to be purchased. This addition processing may be, for example, well-known processing as performed in the POS system in the related art.

If the shopping is stopped by canceling all the merchandise to be purchased of which the registration is completed, the customer performs the predetermined administration for instructing the stopping of the shopping, in the list screen during the display. For example, the customer taps the button BU11 displayed on the list screen SC1 in the A store. The customer cannot perform the administration in the B store. The notification of the administration performed in Act 14 of FIG. 5 by the processor 11 in response the administration is to notify the administration for the stopping instruction.

In the transaction processing server 20, if the administration for the stopping instruction as described above is notified, the processor 21 determines YES in Act 34 and the process proceeds to Act 37.

As Act 37, the processor 21 executes the canceling processing for canceling all the merchandise to be purchased of which the registration is completed. The canceling processing may be well-known processing performed, for example, in the POS system in the related art.

Both of the addition processing in Act 36 and the canceling processing in Act 37 are examples of the information processing for processing the transaction with the customer. That is, the processor 21 executes the information processing for processing the transaction in response to the instruction of the customer input and notified by the portable terminal 10. That is, by the execution of the information processing based on the transaction processing application AP21 by the processor 21, the computer with the processor 21 as the central part functions as the processing unit.

If the settlement completion command is started, the customer performs the predetermined administration for instructing the settlement completion command start on the list screen during the display. For example, the customer taps the button BU13 presented on the list screen SC1 in the A store. For example, the customer taps the button BU22 presented on the list screen SC2 in the B store. As described above, the same administration code is assigned to the button BU13 and the button BU22. Accordingly, in the administration notification performed in Act 14 of FIG. 5 by the processor 11 in response to the user input selecting the button BU13 or button BU22, the same settlement completion command start is notified to the transaction processing server 20.

In the transaction processing server 20, if the administration for instructing the settlement completion command start is notified as described above, the processor 21 determines YES in Act 35 and ends the registration processing. In this case, the process proceeds to Act 28 in FIG. 6 and the processor 21 starts the settlement processing.

As described above, the transaction processing system 100 receives the user inputs from the customer by the same UI processing in the portable terminal 10 with respect to the transactions in any member store. Accordingly, the customer is not required to use the application in response to the store. According to the transaction processing system 100, the administration screens to be displayed on the portable terminals 10 may be caused to be different for each of the member stores, the unique service of each store can be achieved, and the smartphone POS service can be provided as if the smartphone POS service is a unique service to each store even though the smartphone POS includes only a single shopping application.

With respect to the transaction in any member store, the transaction processing system 100 processes the common transaction processing by the transaction processing server 20. Accordingly, the transaction processing is not required to be independently executed in each of the store systems 30, and the smartphone POS service can be simply and easily performed.

The transaction processing system 100 identifies the member store into which the customer enters by using a beacon transmitted by the access point 34 included in the store system 30. Accordingly, there is no need for the customer to designate the store.

In the portable terminal 10, if the screen file relating to the administration screen assigned to the entered member store is included in the screen file group SF11, the processor 11 causes the touch panel 14 to display the administration screen based on the screen file. Accordingly, it is not necessarily required to obtain the screen file from the outside when the administration screen is displayed.

In the portable terminal 10, if the screen file relating to the administration screen assigned to the entered member store is not included in the screen file group SF11, the processor 11 downloads the screen file promptly after the entry into the member store. Accordingly, it is possible to promptly display the administration screen thereafter.

Various modifications on the present embodiment can be performed.

The identifier such as the SSID assigned to the access point 34 included in the member store may be used as the store identifier without change.

A portion or all of the information processing for processing the transaction with the customer may be executed by the processor 11 in the portable terminal 10. In this case, the computer with the processor 11 as the central part includes a function as the processing unit.

In the portable terminal 10, the processor 11 may access the store database DB21 to obtain the member store ID. In this case, it is preferable that the store database DB21 can be accessed by the processor 11, and may be stored in any storage device other than the auxiliary storage unit 23.

The screen file of the administration screen displayed by the portable terminal 10 may be determined by the transaction processing server 20 or other server devices. In this case, the screen file is designated from the device that performs the determination to the portable terminal 10. In the portable terminal 10, the processor 11 causes the touch panel 14 to display the screen based on the designated screen file. The designation of the screen file to the portable terminal 10 may be performed by the notification of the file name or be performed by the transmission of the screen file.

The function as the transaction processing server 20 may be achieved by dispersion processing by a plurality of server devices.

The processor 11 in the portable terminal 10 may obtain the identifier for identifying the store visited by the customer from the store server 31 by the communication via the access point 34. Otherwise, the processor 11 may obtain the identifier transmitted from a device that transmits any identifier other than the access point 34.

The display device that displays the administration screen is not limited to the touch panel 14 or may be a device dedicated to the display. The display device that displays the administration screen may not be included in the portable terminal 10. For example, the administration screen may be displayed on a display device included, for example, in other terminal devices that can directly wirelessly communicate with the portable terminal 10.

A portion or all of the functions performed by the processors 11 and 21 by the information processing can be performed by the hardware that executes the information processing that is not based on the program such as a logic circuit. Each of the functions can be performed by a combination of hardware such as the above logic circuit with software control.

While certain embodiments have been described, these embodiments have been presented by way of example only, and are not intended to limit the scope of the invention which is defined by the appended claims.

Indeed, the novel embodiment described herein may be embodied in a variety of other forms; furthermore, various omissions, substitutions and changes in the form of the embodiments described herein may be made without departing from the scope of the claims.

## Claims

1. A handheld wireless terminal (10) configured to function as a user interface for a customer who goes shopping using a transaction processing system (100), the transaction processing system including the handheld wireless terminal, a transaction processing server (20) and a plurality of store systems (30) communicably connected via a communication network (40), each of the store systems being provided in each of a plurality of member stores, the handheld wireless terminal comprising:
a first wireless communication interface (16) configured to receive a beacon signal when in a communication range of a wireless access point (34) at a visited store which is one of the plurality of member stores;
a second wireless communication interface (17);
a display (14);
a screen file depository (13); and
a processor (11) configured to perform a mobile point-of-sales (POS) operation including:
upon the first wireless communication interface receiving the beacon signal, controlling the second wireless communication interface to transmit to the transaction processing server a store entry inquiry including an ID indicated by the received beacon signal or a corresponding store ID of the visited store;
upon the second wireless communication interface receiving a store entry notification returned by the transaction processing server in response to the store entry inquiry, the store entry notification including one or more screen IDs of one or more operation screens associated with the store ID of the visited store, determining whether or not the screen file depository stores all of screen data of the one or more operation screens identified by the one or more screen IDs;
upon determining that the screen file depository does not store all of the screen data of the one or more operation screens, operating to download from the transaction processing server a missing part of the screen data to the screen file depository; and
controlling the display to display an operation screen based on the screen data stored in the screen file depository,
wherein a display format of a first operation screen identified by a screen ID associated with a first store ID is different from a display format of a second operation screen identified by the screen ID associated with a second store ID, and a transaction in each of the member stores is processed by a transaction processing application (AP21) of the transaction processing server in response to inputs from the customer through each respective operation screen.

2. The handheld wireless terminal according to claim 1, further comprising a camera (15), wherein the mobile POS operation further includes controlling the camera to perform a code scanning operation based on a user operation on the operation screen displayed on the display.

3. The handheld wireless terminal according to claim 2, wherein the mobile POS operation further includes controlling the second wireless communication interface to transmit a product code obtained by the code scanning operation to cause registration of a product identified by the product code.

4. The handheld wireless terminal according to claim 3, wherein the mobile POS operation further includes controlling the second wireless communication interface to transmit a cancellation instruction to cancel registration of the product based on a user operation on the operation screen.

5. The handheld wireless terminal according to claim 3 or 4, wherein the mobile POS operation further includes controlling the second wireless communication interface to transmit a settlement instruction to perform settlement of registered products.

6. The handheld wireless terminal according to any one of claims 1 to 5, wherein the processor is configured to perform the mobile POS operation based on a mobile POS application program installed thereto.

7. The handheld wireless terminal according to any one of claims 1 to 6, wherein the mobile POS operation further includes: upon determining that the screen file depository stores all of the screen data of the one or more operation screens, controlling the second wireless communication interface to transmit a notification indicating all of the screen data has been downloaded.

8. A transaction processing system (100), comprising:
the plurality of store systems (30), each of the store systems including a wireless access point (34) that is provided at each of the -m plurality of member stores identified by a store ID and configured to generate a beacon signal indicating an ID corresponding to the store ID;
the transaction processing server (20); and
the handheld wireless terminal (10) according to any one of claims 1 to 7, configured to communicate with the transaction processing server.

9. The transaction processing system according to claim 8, wherein the transaction processing server is configured to register a product identified by a product code transmitted by the handheld wireless terminal.

10. The transaction processing system according to claim 9, wherein the transaction processing server is configured to cancel registration of the product based on a cancellation instruction transmitted by the handheld wireless terminal.

11. The transaction processing system according to claim 9 or 10, wherein the transaction processing server is configured to perform settlement of the registered products based on a settlement instruction transmitted by the handheld wireless terminal.

12. The transaction processing system according to any one of claims 8 to 11, wherein the wireless access point in each of the store systems is provided near a store entrance.

13. The transaction processing system according to any one of claims 8 to 12, wherein the transaction processing server is configured to return a non-registered store notification in response to the store entry inquiry when the store ID of the visited store is not registered.

14. A method for performing a mobile point-of-sales (POS) operation with a handheld wireless terminal (10) configured to function as a user interface for a customer who goes shopping using a transaction processing system (100), the transaction processing system including the handheld wireless terminal, a transaction processing server (20) and a plurality of store systems (30) communicably connected via a communication network (40), each of the store systems being provided in each of a plurality of member stores, the method comprising:
receiving, by a first wireless communication interface (16) of the handheld wireless terminal, a beacon signal when in a communication range of a wireless access point (34) at a visited store, which is one of the plurality of member stores;
upon the first wireless communication interface receiving the beacon signal, transmitting to the transaction processing server by a second wireless communication interface (17) of the handheld wireless terminal, a store entry inquiry including the ID indicated by the received beacon signal or a corresponding store ID of the visited store;
receiving, by the second wireless communication interface, a store entry notification returned by the transaction processing server in response to the store entry inquiry, the store entry notification including one or more screen IDs of one or more operation screens associated with the store ID of the visited store;
upon the second wireless communication interface receiving the store entry notification, determining whether or not the handheld wireless terminal stores all of screen data of the one or more operation screens identified by the one or more screen IDs;
upon determining that the handheld wireless terminal does not store all of the screen data of the one or more operation screens, downloading from the transaction processing server a missing part of the screen data to the handheld wireless terminal; and
displaying, on a display (14) of the handheld wireless terminal, an operation screen based on the screen data stored in the handheld wireless terminal,
wherein a display format of a first operation screen identified by a screen ID associated with a first store ID is different from a display format of a second operation screen identified by the screen ID associated with a second store ID, and a transaction in each of the member stores is processed by a transaction processing application (AP21) of the transaction processing server in response to inputs from the customer through each respective operation screen.

## Patentansprüche

1. Drahtloses Handendgerät (10), das dafür konfiguriert ist, als Benutzerschnittstelle für einen Kunden zu fungieren, der unter Verwendung eines Transaktionsverarbeitungssystems (100) einkaufen geht, wobei das Transaktionsverarbeitungssystem (100) beinhaltet:
das drahtlose Handendgerät,
einen Transaktionsverarbeitungsserver (20) und mehrerer Ladensysteme (30), die kommunikationsfähig über ein Kommunikationsnetzwerk (40) verbunden sind, wobei jedes der Ladensysteme in jedem von mehreren teilnehmenden Läden bereitgestellt ist, wobei das drahtlose Handendgerät Folgendes umfasst:
eine erste drahtlose Kommunikationsschnittstelle (16), die dafür konfiguriert ist, ein Peilsignal zu empfangen, wenn sie sich in einer Kommunikationsreichweite eines drahtlosen Zugangspunktes (34) in einem besuchten Laden befindet, der einer der mehreren teilnehmenden Läden ist, eine zweite drahtlose Kommunikationsschnittstelle (17),
eine Anzeige (14),
ein Bildschirmdateiablage (13) und
einen Prozessor (11), der dafür konfiguriert ist, eine Operation eines mobilen Point of Sale (PoS) durchzuführen, Folgendes beinhaltend:
nachdem die erste drahtlose Kommunikationsschnittstelle das Peilsignal empfängt, Steuern der zweiten drahtlosen Kommunikationsschnittstelle, an den Transaktionsverarbeitungsserver eine Ladeneintrittsanfrage zu übertragen, die eine von dem empfangenen Peilsignal angegebene Kennung oder eine entsprechende Ladenkennung des besuchten Ladens beinhaltet,
nachdem die zweite drahtlose Kommunikationsschnittstelle eine Ladeneintrittsbenachrichtigung empfängt, die von dem Transaktionsverarbeitungsserver in Reaktion auf die Ladeneintrittsanfrage zurückgegeben wird, wobei die Ladeneintrittsbenachrichtigung eine oder mehrere Bildschirmkennungen eines oder mehrerer Operationsbildschirme beinhaltet, die der Ladenkennung des besuchten Ladens zugeordnet ist, Bestimmen, ob die Bildschirmdateiablage alle von Bildschirmdaten des einen oder der mehreren Operationsbildschirme, die von der einen oder den mehreren Bildschirmkennungen identifiziert wird/werden, speichert oder nicht,
nach dem Bestimmen, dass die Bildschirmdateiablage nicht alle der Bildschirmdaten des einen oder der mehreren Operationsbildschirme speichert, Durchführen einer Operation, um von dem Transaktionsverarbeitungsserver einen fehlenden Teil der Bildschirmdaten in die Bildschirmdateiablage herunterzuladen, und
Steuern der Anzeige, einen Operationsbildschirm basierend auf den Bildschirmdaten anzuzeigen, die in der Bildschirmdateiablage gespeichert sind,
wobei ein Anzeigeformat eines ersten Operationsbildschirms, der durch eine Bildschirmkennung identifiziert ist, die einer ersten Ladenkennung zugeordnet ist, sich von einem Anzeigeformat eines zweiten Operationsbildschirms unterscheidet, der durch die Bildschirmkennung identifiziert ist, die einer zweiten Ladenkennung zugeordnet ist, und eine Transaktion in jedem der teilnehmenden Läden von einer Transaktionsverarbeitungsanwendung (AP21) des Transaktionsverarbeitungsservers in Reaktion auf Eingaben von dem Kunden über jeden jeweiligen Operationsbildschirm verarbeitet wird.

2. Drahtloses Handendgerät nach Anspruch 1, ferner eine Kamera (15) umfassend, wobei die Operation des mobilen PoS ferner das Steuern der Kamera beinhaltet, um basierend auf einer Benutzeroperation auf dem Operationsbildschirm, der auf der Anzeige angezeigt wird, eine Code-Scan-Operation durchzuführen.

3. Drahtloses Handendgerät nach Anspruch 2, wobei die Operation des mobilen PoS ferner das Steuern der zweiten drahtlosen Kommunikationsschnittstelle beinhaltet, um einen durch die Code-Scan-Operation erhaltenen Produktcode zu übertragen, um eine Registrierung eines von dem Produktcode identifizierten Produkts zu bewirken.

4. Drahtloses Handendgerät nach Anspruch 3, wobei die Operation des mobilen PoS ferner das Steuern der zweiten drahtlosen Kommunikationsschnittstelle beinhaltet, um eine Stornierungsanweisung zu übertragen, um die Registrierung des Produkts basierend auf einer Benutzeroperation auf dem Operationsbildschirm zu stornieren.

5. Drahtloses Handendgerät nach Anspruch 3 oder 4, wobei die Operation des mobilen PoS ferner das Steuern der zweiten drahtlosen Kommunikationsschnittstelle beinhaltet, um eine Abrechnungsanweisung zu übertragen, um eine Abrechnung der registrierten Produkte durchzuführen.

6. Drahtloses Handendgerät nach einem der Ansprüche 1 bis 5, wobei der Prozessor dafür konfiguriert ist, die Operation des mobilen PoS basierend auf einem Anwendungsprogramm des mobilen PoS, das auf diesem installiert ist, durchzuführen.

7. Drahtloses Handendgerät nach einem der Ansprüche 1 bis 6, wobei die Operation des mobilen PoS ferner Folgendes beinhaltet: nach dem Bestimmen, dass die Bildschirmdateiablage alle Bildschirmdaten des einen oder der mehreren Operationsbildschirme speichert, Steuern der zweiten drahtlosen Kommunikationsschnittstelle, um eine Benachrichtigung zu übertragen, die angibt, dass alle der Bildschirmdaten heruntergeladen wurden.

8. Transaktionsverarbeitungssystem (100), umfassend:
die mehreren Ladensysteme (30), wobei jedes der Ladensysteme einen drahtlosen Zugangspunkt (34) beinhaltet, der in jedem der mehreren teilnehmenden Läden bereitgestellt ist, die durch eine Ladenkennung identifiziert sind, und der dafür konfiguriert ist, ein Peilsignal zu erzeugen, das eine Kennung angibt, die der Ladenkennung entspricht,
den Transaktionsverarbeitungsserver (20) und
das drahtlose Handendgerät (10) nach einem der Ansprüche 1 bis 7, das dafür konfiguriert ist, mit dem Transaktionsverarbeitungsserver zu kommunizieren.

9. Transaktionsverarbeitungssystem nach Anspruch 8, wobei der Transaktionsverarbeitungsserver dafür konfiguriert ist, ein Produkt zu registrieren, das durch einen Produktcode identifiziert wird, der von dem drahtlosen Handendgerät übertragen wird.

10. Transaktionsverarbeitungssystem nach Anspruch 9, wobei der Transaktionsverarbeitungsserver dafür konfiguriert ist, die Registrierung des Produkts basierend auf einer Stornierungsanweisung, die von dem drahtlosen Handendgerät übertragen wird, zu stornieren.

11. Transaktionsverarbeitungssystem nach Anspruch 9 oder 10, wobei der Transaktionsverarbeitungsserver dafür konfiguriert ist, eine Abrechnung der registrierten Produkte basierend einer Abrechnungsanweisung, die von dem drahtlosen Handendgerät übertragen wird, durchzuführen.

12. Transaktionsverarbeitungssystem nach einem der Ansprüche 8 bis 11, wobei der drahtlose Zugangspunkt in jedem der Ladensysteme nahe einem Ladeneingang bereitgestellt ist.

13. Transaktionsverarbeitungssystem nach einem der Ansprüche 8 bis 12, wobei der Transaktionsverarbeitungsserver dafür konfiguriert ist, eine Nichtregistrierter-Laden-Benachrichtigung in Reaktion auf die Ladeneintrittsanfrage zurückzugeben, wenn die Ladenkennung des besuchten Ladens nicht registriert ist.

14. Verfahren zum Durchführen einer Operation eines mobilen Point of Sales (PoS) mit einem drahtlosen Handendgerät (10), das dafür konfiguriert ist, als Benutzerschnittstelle für einen Kunden zu fungieren, der unter Verwendung eines Transaktionsverarbeitungssystems (100) einkaufen geht, wobei das Transaktionsverarbeitungssystem beinhaltet: das drahtlose Handendgerät, einen Transaktionsverarbeitungsserver (20) und mehrere Ladensysteme (30), die kommunikationsfähig über ein Kommunikationsnetzwerk (40) verbunden sind, wobei jedes der Ladensysteme in jedem von mehreren teilnehmenden Läden bereitgestellt ist, wobei das Verfahren Folgendes umfasst:
Empfangen eines Peilsignals durch eine erste drahtlose Kommunikationsschnittstelle (16) des drahtlosen Handendgeräts, wenn diese sich in einer Kommunikationsreichweite eines drahtlosen Zugangspunktes (34) in einem besuchten Laden befindet, der einer der mehreren teilnehmenden Läden ist,
nachdem die erste drahtlose Kommunikationsschnittstelle das Peilsignal empfängt, Übertragen einer Ladeneintrittsanfrage, die eine von dem empfangenen Peilsignal angegebene Kennung oder eine entsprechende Ladenkennung des besuchten Ladens beinhaltet, durch eine zweite drahtlose Kommunikationsschnittstelle (17) des drahtlosen Handendgeräts an den Transaktionsverarbeitungsserver,
Empfangen einer Ladeneintrittsbenachrichtigung, die von dem Transaktionsverarbeitungsserver in Reaktion auf die Ladeneintrittsanfrage zurückgegeben wird, durch die zweite drahtlose Kommunikationsschnittstelle, wobei die Ladeneintrittsbenachrichtigung eine oder mehrere Bildschirmkennungen eines oder mehrerer Operationsbildschirme beinhaltet, die der Ladenkennung des besuchten Ladens zugeordnet ist/sind,
nach dem Empfangen der Ladeneintrittsbenachrichtigung durch die zweite drahtlose Kommunikationsschnittstelle Bestimmen, ob das drahtlose Handendgerät alle von Bildschirmdaten des einen oder der mehreren Operationsbildschirme, die durch die eine oder die mehreren Bildschirmkennungen identifiziert wird/werden, speichert oder nicht,
nach dem Bestimmen, dass das drahtlose Handendgerät nicht alle der Bildschirmdaten des einen oder der mehreren Operationsbildschirme speichert, Herunterladen eines fehlenden Teils der Bildschirmdaten von dem Transaktionsverarbeitungsserver auf das drahtlose Handendgerät, und
Anzeigen eines Operationsbildschirms auf einer Anzeige (14) des drahtlosen Handendgeräts, basierend auf den in dem drahtlosen Handendgerät gespeicherten Bildschirmdaten,
wobei ein Anzeigeformat eines ersten Operationsbildschirms, der durch eine Bildschirmkennung identifiziert ist, die einer ersten Ladenkennung zugeordnet ist, sich von einem Anzeigeformat eines zweiten Operationsbildschirms unterscheidet, der durch die Bildschirmkennung identifiziert ist, die einer zweiten Ladenkennung zugeordnet ist, und eine Transaktion in jedem der teilnehmenden Läden von einer Transaktionsverarbeitungsanwendung (AP21) des Transaktionsverarbeitungsservers in Reaktion auf Eingaben von dem Kunden über jeden jeweiligen Operationsbildschirm verarbeitet wird.

## Revendications

1. Terminal sans fil de poche (10) configuré de manière à servir d'interface utilisateur pour un client faisant ses courses à l'aide d'un système de traitement de transactions (100), le système de traitement de transactions incluant le terminal sans fil de poche, un serveur de traitement de transactions (20) et une pluralité de systèmes de magasins (30) connectés de manière à pouvoir communiquer par l'intermédiaire d'un réseau de communication (40), chacun des systèmes de magasins étant fourni dans chaque magasin d'une pluralité de magasins membres, le terminal sans fil de poche comprenant :
une première interface de communication sans fil (16) configurée de manière à recevoir un signal de balise, lorsqu'elle se situe à portée de communication d'un point d'accès sans fil (34) au niveau d'un magasin visité faisant partie de la pluralité de magasins membres ;
une deuxième interface de communication sans fil (17) ;
un afficheur (14) ;
un module de dépôt de fichiers d'écran (13) ; et
un processeur (11) configuré de manière à mettre en oeuvre une opération de point de vente (POS) mobile, incluant les étapes ci-dessous consistant à :
suite à la réception du signal de balise par la première interface de communication sans fil, commander, à la deuxième interface de communication sans fil, de transmettre, au serveur de traitement de transactions, une requête d'entrée en magasin incluant un identifiant, ID, indiqué par le signal de balise reçu, ou un identifiant, ID, de magasin correspondant du magasin visité ;
suite à la réception, par la deuxième interface de communication sans fil, d'une notification d'entrée en magasin renvoyée par le serveur de traitement de transactions en réponse à la requête d'entrée en magasin, dans laquelle la notification d'entrée en magasin inclut un ou plusieurs identifiants, ID, d'écran d'un ou plusieurs écrans d'opération associés à l'identifiant, ID, de magasin du magasin visité, déterminer si le module de dépôt de fichiers d'écran stocke ou non toutes les données d'écrans dudit un ou desdits plusieurs écrans d'opération identifiés par ledit un ou lesdits plusieurs identifiants, ID, d'écran ;
suite à une détermination selon laquelle le module de dépôt de fichiers d'écran ne stocke pas toutes les données d'écrans dudit un ou desdits plusieurs écrans d'opération, télécharger, à partir du serveur de traitement de transactions, une partie manquante des données d'écrans vers le module de dépôt de fichiers d'écran ; et
commander à l'afficheur d'afficher un écran d'opération sur la base des données d'écrans stockées dans le module de dépôt de fichiers d'écran ;
dans lequel un format d'affichage d'un premier écran d'opération identifié par un identifiant, ID, d'écran associé à un premier identifiant, ID, de magasin est différent d'un format d'affichage d'un deuxième écran d'opération identifié par un identifiant, ID, d'écran associé à un deuxième identifiant, ID, de magasin, et une transaction dans chacun des magasins membres est traitée par une application de traitement de transactions (AP21) du serveur de traitement de transactions en réponse à des entrées de la part du client par l'intermédiaire de chaque écran d'opération respectif.

2. Terminal sans fil de poche selon la revendication 1, comprenant en outre une caméra (15), dans lequel l'opération de point POS mobile inclut en outre l'étape consistant à commander à la caméra de mettre en oeuvre une opération de balayage de code sur la base d'une opération d'utilisateur sur l'écran d'opération affiché sur l'afficheur.

3. Terminal sans fil de poche selon la revendication 2, dans lequel l'opération de point POS mobile inclut en outre l'étape consistant à commander, à la deuxième interface de communication sans fil, de transmettre un code de produit obtenu par l'opération de balayage de code afin d'occasionner l'enregistrement d'un produit identifié par le code de produit.

4. Terminal sans fil de poche selon la revendication 3, dans lequel l'opération de point POS mobile inclut en outre l'étape consistant à commander, à la deuxième interface de communication sans fil, de transmettre une instruction d'annulation pour annuler l'enregistrement du produit sur la base d'une opération d'utilisateur sur l'écran d'opération.

5. Terminal sans fil de poche selon la revendication 3 ou 4, dans lequel l'opération de point POS mobile inclut en outre l'étape consistant à commander, à la deuxième interface de communication sans fil, de transmettre une instruction de règlement visant à mettre en oeuvre un règlement des produits enregistrés.

6. Terminal sans fil de poche selon l'une quelconque des revendications 1 à 5, dans lequel le processeur est configuré de manière à mettre en oeuvre l'opération de point POS mobile sur la base d'un programme d'application de point POS mobile installé sur celui-ci.

7. Terminal sans fil de poche selon l'une quelconque des revendications 1 à 6, dans lequel l'opération de point POS mobile inclut en outre l'étape ci-après consistant à : suite à une détermination selon laquelle le module de dépôt de fichiers d'écran stocke toutes les données d'écrans dudit un ou desdits plusieurs écrans d'opération, commander, à la deuxième interface de communication sans fil, de transmettre une notification indiquant que toutes les données d'écrans ont été téléchargées.

8. Système de traitement de transactions (100), comprenant :
la pluralité de systèmes de magasins (30), chacun des systèmes de magasins incluant un point d'accès sans fil (34) qui est fourni au niveau de chaque magasin, de la pluralité de magasins membres, identifié par un identifiant, ID, de magasin, et configuré de manière à générer un signal de balise indiquant un identifiant, ID, correspondant à l'identifiant, ID, de magasin ;
le serveur de traitement de transactions (20) ; et
le terminal sans fil de poche (10) selon l'une quelconque des revendications 1 à 7, configuré de manière à communiquer avec le serveur de traitement de transactions.

9. Système de traitement de transactions selon la revendication 8, dans lequel le serveur de traitement de transactions est configuré de manière à enregistrer un produit identifié par un code de produit transmis par le terminal sans fil de poche.

10. Système de traitement de transactions selon la revendication 9, dans lequel le serveur de traitement de transactions est configuré de manière à annuler l'enregistrement du produit sur la base d'une instruction d'annulation transmise par le terminal sans fil de poche.

11. Système de traitement de transactions selon la revendication 9 ou 10, dans lequel le serveur de traitement de transactions est configuré de manière à mettre en oeuvre un règlement des produits enregistrés sur la base d'une instruction de règlement transmise par le terminal sans fil de poche.

12. Système de traitement de transactions selon l'une quelconque des revendications 8 à 11, dans lequel le point d'accès sans fil, dans chacun des systèmes de magasins, est fourni à proximité d'une entrée de magasin.

13. Système de traitement de transactions selon l'une quelconque des revendications 8 à 12, dans lequel le serveur de traitement de transactions est configuré de manière à renvoyer une notification de magasin non enregistré, en réponse à la requête d'entrée en magasin, lorsque l'identifiant, ID, de magasin du magasin visité n'est pas enregistré.

14. Procédé de mise en oeuvre d'une opération de point de vente (POS) mobile avec un terminal sans fil de poche (10) configuré de manière à servir d'interface utilisateur pour un client faisant ses courses à l'aide d'un système de traitement de transactions (100), le système de traitement de transactions incluant le terminal sans fil de poche, un serveur de traitement de transactions (20) et une pluralité de systèmes de magasins (30) connectés de manière à pouvoir communiquer par l'intermédiaire d'un réseau de communication (40), chacun des systèmes de magasins étant fourni dans chaque magasin d'une pluralité de magasins membres, le procédé comprenant les étapes ci-dessous consistant à :
recevoir, par le biais d'une première interface de communication sans fil (16) du terminal sans fil de poche, un signal de balise, lorsque l'interface se situe à portée de communication d'un point d'accès sans fil (34) au niveau d'un magasin visité, lequel fait partie de la pluralité de magasins membres ;
suite à la réception du signal de balise par la première interface de communication sans fil, transmettre, au serveur de traitement de transactions, par le biais d'une deuxième interface de communication sans fil (17) du terminal sans fil de poche, une requête d'entrée en magasin incluant l'identifiant, ID, indiqué par le signal de balise reçu, ou un identifiant, ID, de magasin correspondant du magasin visité ;
recevoir, par le biais de la deuxième interface de communication sans fil, une notification d'entrée en magasin renvoyée par le serveur de traitement de transactions en réponse à la requête d'entrée en magasin, la notification d'entrée en magasin incluant un ou plusieurs identifiants, ID, d'écran d'un ou plusieurs écrans d'opération associés à l'identifiant, ID, de magasin du magasin visité ;
suite à la réception, par la deuxième interface de communication sans fil, de la notification d'entrée en magasin, déterminer si le terminal sans fil de poche stocke ou non toutes les données d'écrans dudit un ou desdits plusieurs écrans d'opération identifiés par ledit un ou lesdits plusieurs identifiants, ID, d'écran ;
suite à une détermination selon laquelle le terminal sans fil de poche ne stocke pas toutes les données d'écrans dudit un ou desdits plusieurs écrans d'opération, télécharger, à partir du serveur de traitement de transactions, une partie manquante des données d'écrans vers le terminal sans fil de poche ; et
afficher, sur un afficheur (14) du terminal sans fil de poche, un écran d'opération, sur la base des données d'écrans stockées dans le terminal sans fil de poche, dans lequel un format d'affichage d'un premier écran d'opération identifié par un identifiant, ID, d'écran associé à un premier identifiant, ID, de magasin est différent d'un format d'affichage d'un deuxième écran d'opération identifié par l'identifiant, ID, d'écran associé à un deuxième identifiant, ID, de magasin, et une transaction dans chacun des magasins membres est traitée par une application de traitement de transactions (AP21) du serveur de traitement de transactions en réponse à des entrées de la part du client par l'intermédiaire de chaque écran d'opération respectif.
